# EUROPÄISCHE PATENTANMELDUNG

(11) **EP 0 709 565 A1**
(43) Veröffentlichungstag der Anmeldung: **01.05.1996**
(21) Anmeldenummer: 95116636.2
(22) Anmeldetag: 23.10.1995
(51) Int. Cl.: F02M 31/10, F28F 19/00, F16L 53/00

(54) **Be- und Entlüftungsschlauch für Teile von Kraftfahrzeugmotoren**

(30) Priorität: 25.10.1994 DE 4438093
(71) Anmelder: Continental Aktiengesellschaft, D-30165 Hannover (DE); Bayerische Motoren Werke Aktiengesellschaft, D-80809 München (DE)
(72) Erfinder: Gieler, Joachim, D-37154 Northeim (DE); Bräutigam, Ernst, D-85354 Freising (DE)
(74) Vertreter: Schneider, Egon

(57) **Zusammenfassung**

Die Erfindung betrifft einen Be- und Entlüftungsschlauch für Teile von Kraftfahrzeugmotoren. Der Schlauch weist einen von dem Kühlmedium des Motors durchströmbaren Heizkanal auf, so daß bei tiefen Temperaturen die Gefahr des Zufrierens durch Kondenswasser beseitigt ist.

## Beschreibung

Die Erfindung betrifft eine Be- und Entlüftungseinrichtung für Teile von Kraftfahrzeugmotoren, für deren bestimmungsgemäße Funktion eine ständige Be- bzw. Entlüftung gewährleistet sein muß, gemäß dem Oberbegriff des Patentanspruchs 1.

Bei tiefen Außentemperaturen kann es in solchen Schläuchen infolge gefrierenden Kondenswassers zur Bildung von Eispfropfen kommen, die den freien Strömungsquerschnitt verengen oder gar verstopfen. Dies kann zu Funktionsstörungen und zu ernsthaften Defekten am Motor bzw. an den angeschlossenen Aggregaten führen.

Um die Be- bzw. Entlüftung von Kraftfahrzeugmotorteilen auch bei extrem tiefen Temperaturen sicher zu gewährleisten, wird in der US-PS 4 768 493 vorgeschlagen, Abschnitte von Motor-Belüftungs- bzw - Entlüftungsleitungen ebenso wie Teile des Kühlwassersystems als starre Rohre auszubilden und diese in wärmeleitendem Kontakt anzuordnen, um so der Vereisung entgegenzuwirken. Das ist jedoch konstruktiv und fertigungstechnisch für eine Großserienfertigung zu aufwendig.

Die vorliegende Erfindung löst die gestellte Aufgabe durch die im kennzeichnenden Teil des Patentanspruches 1 angegebenen Merkmale. In den Unteransprüchen sind vorteilhafte Ausführungsformen der Erfindung gekennzeichnet.

Die erfindungsgemäße Be- und Entlüftungseinrichtung weist jedenfalls drei Schläuche auf, von denen zwei Seite an Seite verlaufen und von dem dritten umfaßt sind, der sie durch Kontraktion seiner Wandung gegeneinander preßt, so daß das den einen Schlauch durchströmende heiße Kühlwasser des Motors die in dem anderen Schlauch geführte Zu- bzw. Abluft ständig erwärmt und eine Vereisung auch bei starkem Frost verhindert.

Der Wärmeübergang findet in dieser Einrichtung sowohl direkt vom Heizschlauch auf den Luftschlauch als auch vom Heizschlauch über die die beiden Schläuche im Innern des Hüllschlauches umgebende Luft auf den Luftschlauch statt. Vorzugsweise wird als Hüllschlauch ein Schrumpfschlauch verwendet, dessen Schrumpfkräfte durch Erwärmung aktiviert werden können und der dann das umhüllte Schlauchpaar fest zusammenpreßt. In einer anderen vorteilhaften Ausführungsform weist der Hüllschlauch eine in Umfangsrichtung zugelastische Wandung auf, so daß der Luftschlauch und der Heizschlauch im aufgeweiteten Zustand des Küllschlauches in diesen eingeführt werden können und dann durch die elastische Rückstellkraft des Hüllschlauches zusammengepreßt werden. Der Hüllschlauch kann insbesondere nach Art eines Wellschlauches oder Faltenbalges ausgebildet sein.

Ferner kann es vorteilhaft sein, einen Hüllschlauch mit wärmedämmender Wandung zu verwenden.

Die beigefügte Zeichnung veranschaulicht die Erfindung anhand eines schematisch wiedergegebenen Ausführungsbeispieles.

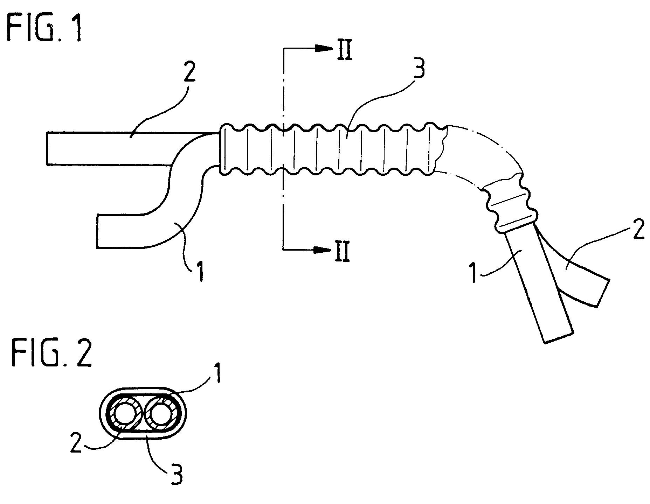

In Figur 1 ist die Seitenansicht eines erfindungsgemäßen Beund Entlüftungsschlauches dargestellt, der einen Luftschlauch 1, einen Heizschlauch 2 und einen diese beiden Schläuche in Form eines Wellschlauches eng umfassenden Hüllschlauch 3 aufweist, so daß sich als Querschnitt II-II die in Figur 2 dargestellte Anordnung ergibt.

## Patentansprüche

1. Be- und Entlüftungseinrichtung für Teile von Kraftfahrzeugmotoren, die einen Luftführungsskanal und einen zu diesem parallelen und mit diesem in unmittelbarem wärmeleitenden Kontakt stehenden, von dem Kühlmedium des Motors durchströmbaren Heizkanal aufweist, **dadurch gekennzeichnet**, daß sowohl der Luftführungskanal (1) als auch der Heizkanal (2) als Schläuche ausgebildet sind, die von einem Hüllschlauch (3) umfaßt werden, der das umhüllte Schlauchpaar (1, 2) durch Kontraktion seiner Wandung zusammenpreßt.

2. Be- und Entlüftungseinrichtung nach Anspruch 1, dadurch gekennzeichnet, daß der Hüllschlauch (3) als Schrumpfschlauch ausgebildet ist, durch dessen Schrumpfkräfte das umhüllte Schlauchpaar (1, 2) zusammengepreßt wird.

3. Be- und Entlüftungseinrichtung nach Anspruch 1, dadurch gekennzeichnet, daß die Wandung des Hüllschlauches (3) in Umfangsrichtung zugelastisch ausgebildet und das umhüllte Schlauchpaar
(1, 2) mit der sich aus einer elastischen Aufweitung des Hüllschlauchquerschnitts ergebenden Rückstellkraft zusammengepreßt wird.

4. Be- und Entlüftungseinrichtung nach Anspruch 3, dadurch gekennzeichnet, daß der Hüllschlauch (3) nach Art eines Wellschlauches oder Faltenbalges ausgebildet ist.
